**Europäisches Patentamt**

**European Patent Office**

**Office européen des brevets**

(19)

(11) Veröffentlichungsnummer : **0 001 136**
**B2**

(12) ## NEUE EUROPÄISCHE PATENTSCHRIFT

(45) Veröffentlichungstag der neuen Patentschrift :
**24.08.83**

(21) Anmeldenummer : **78200146.5**

(22) Anmeldetag : **21.08.78**

(51) Int. Cl.³ : **B 60 T 15/12**, B 60 T 13/40,
B 61 H 13/00

(54) **Indirekt wirkende Druckluftbremse.**

(30) Priorität : **07.09.77 CH 10914/77**

(43) Veröffentlichungstag der Anmeldung :
**21.03.79 Patentblatt 79/06**

(45) Bekanntmachung des Hinweises auf die Patenterteilung : **28.05.80 Patentblatt 80/11**

(45) Bekanntmachung des Hinweises auf die Entscheidung
über den Einspruch : **24.08.83 Patentblatt 83/34**

(84) Benannte Vertragsstaaten :
**BE DE FR GB SE**

(56) Entgegenhaltungen :
**DE A 1 809 717**
**DE A 2 252 489**
**DE A 2 454 368**
**DE B 1 160 876**

**« Bremskunde für Triebfahrzeugführer »** der
**Eisenbahn-Lehrbücherei der Deutschen Bundesbahn, Band 122c, 5. Auflage 1973**

(73) Patentinhaber : **Werkzeugmaschinenfabrik Oerli-
kon-Bührle AG**
**Birchstrasse 155**
**CH-8050 Zürich (CH)**

(72) Erfinder : **Müller, Walter**
**Rebenweg 10**
**CH-8303 Bassersdorf (CH)**
Erfinder : **Deutsch, Heinz**
**Kreuzwiesen 17**
**CH-8051 Zürich (CH)**
Erfinder : **Oldani, Karl**
**Leimgrübelstrasse 18**
**CH-8052 Zürich (CH)**

**EP 0 001 136 B2**

## Indirekt wirkende Druckluftbremse

Die Erfindung betrifft eine indirekt wirkende Druckluftbremse mit einer Hauptluftleitung und einem Führerbremsventil, das einen Druckregler und ein Hauptsteuerorgan zum Absenken und Erhöhen des Luftdruckes in der Hauptluftleitung aufweist, mit Organen zum Erzeugen eines Brems- und Lösesprunges.

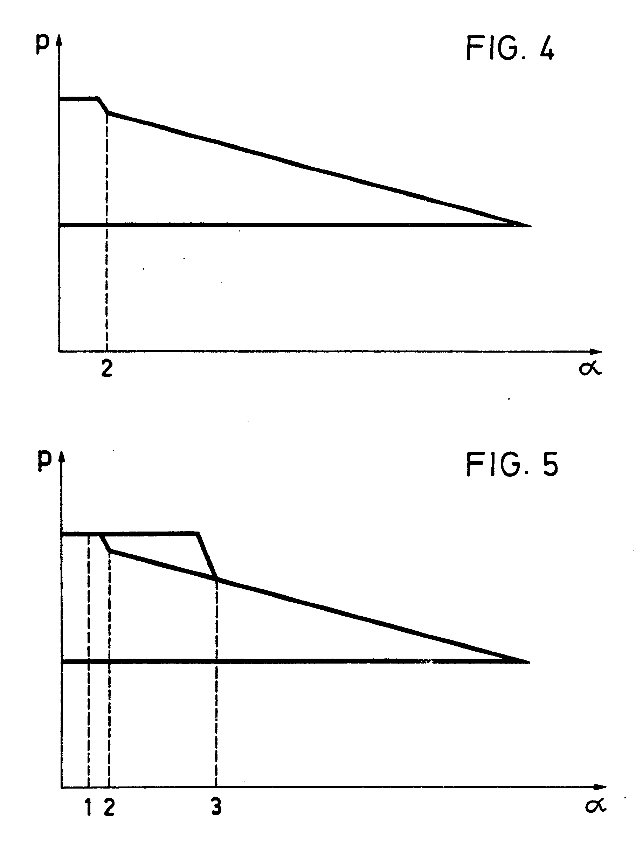

Die Anmelderin hat bisher Druckluftbremsen dieser Art gebaut, bei denen der Druckregler des Führerbremsventiles eine Nockenscheibe aufweist, die so geformt ist, dass beim Anbremsen der Luftdruck in der Hauptluftleitung sprunghaft von z. B. 5 bar auf 4,85 bar absinkt. Beim Bremslösen bewirkt diese Form der Nockenscheibe, dass beim vollständigen Lösen der Bremse der Luftdruck in der Hauptluftleitung sprunghaft von 4,85 auf 5 bar ansteigt. Im übrigen ist diese Nockenscheibe so geformt, dass der Luftdruck in der Hauptluftleitung in Funktion des Schwenkwinkels des Führerbremshebels linear abgesenkt und erhöht werden kann, wie aus Fig. 4 der beigefügten Zeichnung ersichtlich ist.

Der Nachteil dieser bekannten Nockenscheibe ist, dass eine Formänderung derselben sich nicht nur beim Anbremsen, sondern auch beim Bremslösen auswirkt.

Die Aufgabe, die mit der vorliegenden Erfindung gelöst werden soll, besteht in der Schaffung einer Druckluftbremse, bei der die Widerstände im Bremsgestänge durch ein kräftiges Anspringen der Bremse beim Anbremsen sofort überwunden werden, wobei jedoch die Bremse bis zum vollständigen Lösen in möglichst kleinen Stufen schrittweise gelöst werden kann.

Diese Forderung ist besonders dann von Bedeutung, wenn die Bremse nach dem Anspringen sofort, jedoch nicht vollständig wieder gelöst werden soll. Bei den bekannten Bremsen dieser Art bewirkt eine leichte Lösebewegung am Führerbremshebel nach dem Anspringen der Bremse wieder ein unerwünschtes vollständiges Lösen. Andererseits bewirkt eine leichte Bremsbewegung am Führerbremsventil kurz vor dem vollständigen Lösen der Bremse ein unerwünschtes starkes Anspringen der Bremse.

Die vorliegende Erfindung bezweckt diese Mängel der bekannten Bremsen zu beseitigen. Die erfindungsgemässe Druckluftbremse ist dadurch gekennzeichnet, dass das Organ zum Erzeugen des Bremssprunges ein in einer Verbindungsleitung zwischen Druckregler und Hauptsteuerorgan angeordnetes Sitzventil aufweist, das als Rückschlagventil den Rückfluss von Druckluft aus dem Hauptsteuerorgan in den Druckregler verhindert, sowie die Verbindungsleitung vom Hauptsteuerorgan in Richtung zum Druckregler abschliesst, und das von einem Kolben betätigbar ist, der zum Öffnen des Ventiles von einer Feder belastet ist und zum Schliessen des Ventiles vom Steuerdruck des Druckreglers beaufschlagbar ist.

Druckluftbremsen mit Organen zum Erzeugen eines Brems- und Lösesprunges die eine Hysterese aufweisen zum Erzeugen eines grösseren Brems- und eines kleineren Lösesprunges sind zwar bekannt. Es wird auf die Druckschrift « Bremskunde für Triebfahrzeugführer » der Eisenbahn-Lehrbücherei der Deutschen Bundesbahn Band 122c, 5. Auflage 1973, Seite 58 und 59 sowie auf die DE-A-2'552'489 und DE-A-2'454'368 verwiesen. Dabei werden jedoch vollständig andere Mittel verwendet, die nicht mit den erfindungsgemässen Organen vergleichbar sind.

Drei Ausführungsbeispiele der erfindungsgemässen Druckluftbremse sind anhand der beigefügten Zeichnung im folgenden ausführlich beschrieben. Es zeigt:

Figur 1 eine schematische Darstellung der Druckluftbremse gemäss einem ersten Ausführungsbeispiel;

Figur 2 eine schematische Darstellung der Druckluftbremse gemäss einem zweiten Ausführungsbeispiel;

Figur 3 eine schematische Darstellung der Druckluftbremse gemäss einem dritten Ausführungsbeispiel;

Figur 4 ein Diagramm des Druckverlaufes in der Hauptluftleitung in Abhängigkeit der Stellung des Führerbremshebels bei einer bekannten Druckluftbremse;

Figur 5 ein Diagramm des Druckverlaufes in der Hauptluftleitung in Abhängigkeit der Stellung des Führerbremshebels bei der erfindungsgemässen Druckluftbremse.

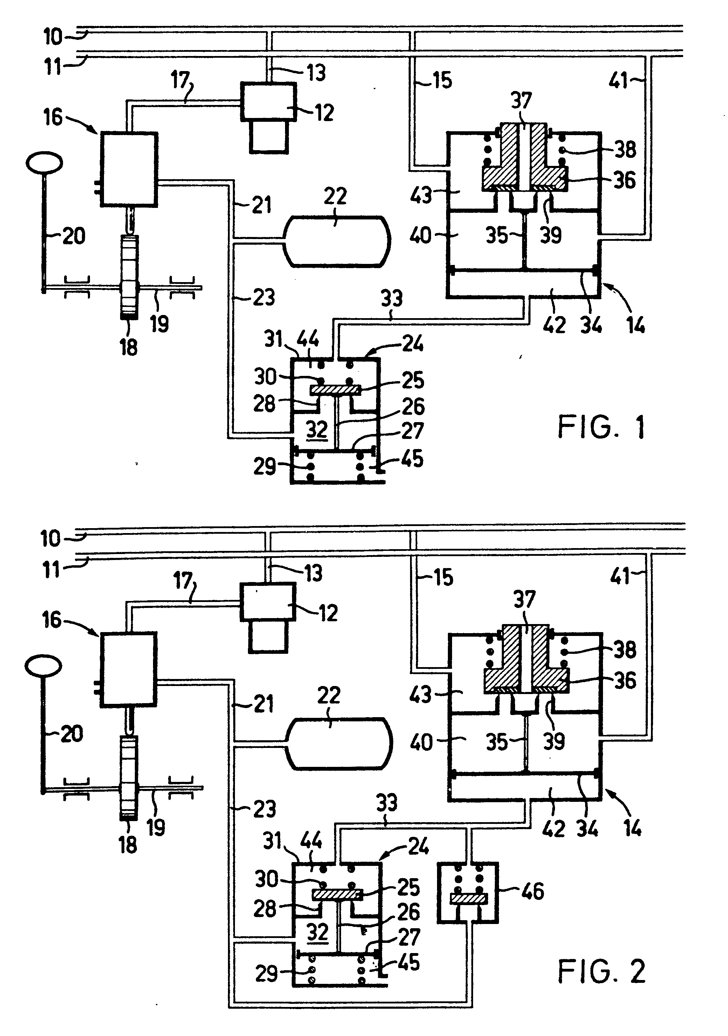

Gemäss Fig. 1 weist die erfindungsgemässe Druckluftbremse eine Speiseleitung 10 und eine Hauptluftleitung 11 auf. An die Speiseleitung 10 ist einerseits ein Druckbegrenzer 12 über eine Zweigleitung 13 und anderseits ein Hauptsteuerorgan 14 über eine Zweigleitung 15 angeschlossen. An den Druckbegrenzer 12 ist ein Druckregler 16 über eine Leitung 17 angeschlossen. Der Druckbegrenzer 12 sorgt dafür, dass die dem Druckregler 16 zugeführte Druckluft ständig unter konstantem Druck zugeführt wird. Der Druckregler 16 ist von an sich bekannter Bauart und deshalb hier nicht näher dargestellt. Zur Betätigung des Druckreglers 16 ist eine Nockenscheibe 18 auf einer drehbar gelagerten Welle 19 befestigt. An der Welle 19 ist ferner ein Führerbremshebel 20 befestigt. Die Form der Nockenscheibe 18 ist so gewählt, dass gemäss Fig. 4 eine lineare Absenkung des Luftdruckes in Funktion des Schwenkwinkels des Führerbremshebels 20 möglich ist. Ausserdem ermöglicht die Nockenscheibe 18 ein sprungweises Erhöhen des Druckes in der Hauptluftleitung 11 kurz vor Erreichen des Maximaldruckes, wie ebenfalls aus Fig. 4 ersichtlich ist.

An den Druckregler 16 ist einerseits über Leitung 21 ein Steuerbehälter 22 und anderseits über Zweigleitung 23 ein kolbenbetätigbares Ventil 24 angeschlossen. Das Ventil 24 weist einen Ventilteller 25 auf, der über eine Kolbenstange

26 durch einen Kolben 27 von einem ortsfesten Ventilsitz 28 abhebbar ist. Eine stärkere Feder 29, die sich einerseits am Kolben 27 und anderseits am Gehäuse 31 des Ventiles 24 abstützt, hat das Bestreben, den Kolben 27 anzuheben und über die Kolbenstange 26 den Ventilteller 25 von seinem Ventilsitz 28 abzuheben. Zwischen dem Ventilteller 25 und dem Kolben 27 ist eine Kammer 32 vorhanden, welche über die Zweigleitung 23 und die Leitung 21 mit dem Druckregler 16 verbunden ist. Eine schwächere Feder 30 hat das Bestreben, den Ventilteller 25 gegen den Ventilsitz 28 zu drücken. Die stärkere Feder 29 ist so gewählt, dass sich z. B. bei einem Druck von 4,5 bar in der Kammer 32 das Ventil 24 öffnen kann. Eine Kammer 45 unterhalb des Kolbens 27 ist entlüftet.

An eine Kammer 44 des Ventiles 24 ist über eine weitere Leitung 33 das erwähnte Hauptsteuerorgan 14 angeschlossen. Dieses Hauptsteuerorgan 14 ist ähnlich ausgebildet wie das soeben beschriebene Ventil 24.

Es weist einen Kolben 34 auf, an dem ein Stössel 35 zur Betätigung eines Ventiltellers 36 befestigt ist. Der Ventilteller 36 weist eine Bohrung 37 auf. Eine Feder 38 hat das Bestreben, den Ventilteller 36 gegen seinen Ventilsitz 39 zu drücken. Zwischen dem Kolben 34 und dem Ventilteller 36 ist eine Kammer 40 vorhanden, die über eine Zweigleitung 41 mit der Hauptluftleitung 11 verbunden ist. Unter dem Kolben 34 ist eine zweite Kammer 42 vorhanden, welche über Zweigleitung 33 mit dem Ventil 24 verbunden ist, und über dem Ventilteller 36 ist eine dritte Kammer 43 vorhanden, die über Zweigleitung 15 mit der Speiseleitung 10 verbunden ist. Das Hauptsteuerorgan 14 besitzt drei Stellungen. In einer ersten Stellung, wenn der Druck in der Kammer 42 unterhalb des Kolbens 34 grösser ist als der Druck in der Kammer 40 zwischen Kolben 34 und Ventilteller 36, ist der Ventilteller 36 von seinem Ventilsitz 39 abgehoben und Druckluft aus der Speiseleitung 10 kann über Zweigleitung 15 und Kammer 43 in die Kammer 40 fliessen und gelangt von dort über Leitung 41 in die Hauptluftleitung 11. In einer zweiten Stellung, wenn der Druck oberhalb und unterhalb des Kolbens 34 gleich gross ist, liegt der Ventilteller 36 auf seinem Ventilsitz 39 auf und der Ventilstössel 35 liegt am Ventilteller 36 an, und es kann somit überhaupt keine Druckluft fliessen. Schliesslich, in einer dritten Stellung, wenn der Druck in der untersten Kammer 42 absinkt, hebt sich der Ventilstössel 35 vom Ventilteller 36 ab und Druckluft strömt aus der Hauptluftleitung 11, über Zweigleitung 41 über Kammer 40 und durch die Bohrung 37 in die Atmosphäre.

Die Wirkungsweise der beschriebenen Druckluftbremse ist wie folgt. In der Speiseleitung herrsche ein Druck von 5-8 bar. Der Druckbegrenzer 12, auch Druckregler genannt, sorgt dafür, dass in der Leitung 17 ein möglichst konstanter Druck von 5 bar herrscht. Mit Hilfe des Führerbremshebels 20 und der Nockenscheibe 18 kann der Druckregler 16 betätigt werden, um den Druck in der Zweigleitung 21 z. B. zwischen den Werten 3,5 und 5 bar zu verändern. Die Form der Nockenscheibe 18 ist aus Fig. 4 erkennbar. Zu Beginn der Betätigung des Führerbremshebels 20 zum Bremsen bleibt der Druck p in der Zweigleitung 21 konstant, z. B. bei 5 bar und sinkt dann sprungweise auf beispielsweise 4,85 bar ab. Anschliessend sinkt dann der Druck linear, d. h. proportional zum Schwenkwinkel des Führerbremshebels 20 auf 3,5 bar ab. Zum Bremslösen wird der Druck in der Zweigleitung 21 von 3,5 bar linear auf 4,85 bar ansteigen, und dann wieder sprunghaft den Wert 5 bar erreichen.

Bei gelöster Bremse ist der Führerbremshebel 20 so gestellt, dass der Druckregler 16 den maximalen Druck von 5 bar in der Leitung 21 und 23 erzeugt. Da das Ventil 24 wie ein Rückschlagventil wirkt und die Feder 30 sehr schwach ist, herrscht auch in der Leitung 33 und in der Kammer 34 des Hauptsteuerorganes 14 ein Druck von 5 bar. Das Hauptsteuerorgan 14 wird erst in die gezeigte Abschlussstellung gelangen, wenn auch — wie weiter oben beschrieben — in der Kammer 40 und somit in der Hauptluftleitung 11 derselbe Druck von 5 bar herrscht.

Zum Bremsen muss der Führerbremshebel 20 derart geschwenkt werden, dass der Druck in der Zweigleitung absinkt. Somit wird auch in der Kammer 32 des Ventiles 24 der Druck absinken. Das wie ein Rückschlagventil wirkende Ventil 24 verhindert jedoch, dass der Druck in Leitung 33 und Kammer 34 absinkt, und somit bleibt auch der Druck von 5 bar in der Hauptluftleitung 11 unverändert. Sobald jedoch der Druck in der Kammer 32 unterhalb 4,5 bar absinkt, ist die Feder 29 in der Lage, das Ventil 24 zu öffnen, d. h. den Ventilteller 25 vom Ventilsitz 28 abzuheben. Somit entsteht auch in der Kammer 42 des Hauptsteuerorganes 14 ein sprunghafter Druckabfall um 0,5 bar, d. h. von 5 bar auf 4,5 bar. Die Hauptluftleitung 11 wird somit ebenfalls auf einen Druck von 4,5 bar entlüftet. Anschliessend wird der Druck in der Hauptluftleitung 11 linear auf 3,5 absinken. Dieser Vorgang ist in Fig. 5 dargestellt. An der Stelle 3 sinkt der Druck p in der Hauptluftleitung 11 sprunghaft um 0,5 bar ab.

Beim Bremslösen muss der Führerbremshebel 20 derart geschwenkt werden, dass der Druck in der Zweigleitung 21 linear ansteigt. Somit wird er auch in der Kammer 32 des Ventiles 24 linear ansteigen. Solange der Druck in der Kammer 32 des Ventiles 24 kleiner als 4,5 bar ist, kann die Feder 29 das Ventil 24 öffnen, und die Druckluft kann aus der Kammer 32 des Ventiles 24 über Kammer 44 und Leitung 33 ungehindert in das Hauptsteuerorgan 14 gelangen. Somit steigt auch der Druck in der Hauptluftleitung 11 linear an. Wenn in der Kammer 32 des Ventiles 24 ein Druck von 4,5 bar erreicht ist, kann weiterhin Druckluft aus der Kammer 32 in Kammer 44 fliessen, weil dann das Ventil 24 als Rückschlagventil wirkt, und die Feder 30 sehr schwach ist. Über Leitung 33 gelangt dann die Druckluft ins Hauptsteuerorgan 14, obwohl die Feder 29 komprimiert ist. Beim Bremslösen wird also der Druck in der Hauptluftleitung 11 erst an Stelle 2 (Fig. 5) sprunghaft ansteigen, entsprechend der Form des Nockens 18.

Das Ausführungsbeispiel, gemäss Fig. 2, unterscheidet sich vom beschriebenen Ausführungsbeispiel, gemäss Fig. 1, nur durch ein Rückschlagventil 46, das die Leitung 23 mit der Leitung 33 verbindet. Dies ist notwendig, falls das Ventil 24 nicht zugleich als Rückschlagventil wirksam ist. An der Wirkungsweise ändert sich dabei nichts, vorausgesetzt, dass der durch das Rückschlagventil 46 bewirkte Druckabfall vernachlässigbar klein ist.

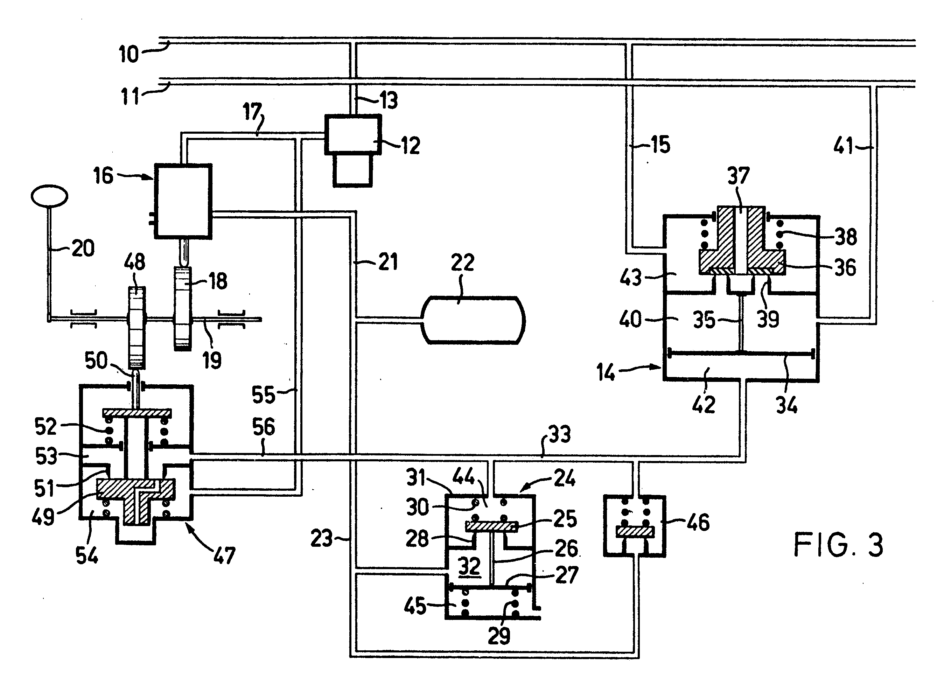

Falls dies jedoch nicht der Fall ist und der Druckabfall, den das Rückschlagventil 46 bewirkt, nicht annehmbar ist, dann ist es notwendig, eine Druckluftbremse gemäss Fig. 3 zu verwenden.

Das Ausführungsbeispiel gemäss Fig. 3 unterscheidet sich von dem beschriebenen Ausführungsbeispiel gemäss Fig. 2 nur durch ein nockenbetätigbares Ventil 47. Zur Betätigung des Ventiles 47 ist auf der Welle 19 eine zweite Nockenscheibe 48 befestigt. Das Ventil 47 weist einen Ventilteller 49 auf, der über einen Ventilstössel 50 durch die Nockenscheibe 48 von seinem Ventilsitz 51 entgegen der Kraft einer Feder 52 abhebbar ist. Der Ventilteller 49 grenzt eine obere Kammer 53 von einer unteren Kammer 54 ab. Die obere Kammer 53 ist über eine Leitung 55 mit dem Druckbegrenzer 12 und die untere Kammer 54 ist über eine Leitung 56 direkt mit dem Hauptsteuerorgan 14 verbunden. Solange also das Ventil 47 offen ist, herrscht in der Kammer 42 des Hauptsteuerorganes 14 der maximale Druck von 5 bar. Die Nockenscheibe 48 ist so ausgebildet, dass sich beim Bremsen das Ventil 47, gemäss Fig. 5, an der Stelle 1 schliesst. Beim Lösen der Bremse öffnet sich das Ventil 47 wiederum an der Stelle 1 gemäss Fig. 5. Das Ventil 47 ist somit praktisch während des ganzen Brems- und Lösevorganges geschlossen. Es dient lediglich dazu, bei gelöster Bremse den vollen Lösedruck von 5 bar in der Hauptluftleitung zu gewährleisten, falls sich ein Druckabfall im Ventil 24 und im Rückschlagventil 46 nicht vermeiden lässt.

**Ansprüche**

1. Indirekt wirkende Druckluftbremse mit einer Hauptluftleitung und mit einem Führerbremsventil, das einen Druckregler (16) und ein Hauptsteuerorgan (14) zum Absenken und Erhöhen des Luftdruckes in der Hauptluftleitung (11) aufweist, mit Organen zum Erzeugen eines Brems- und Lösesprunges, dadurch gekennzeichnet, dass das Organ zum Erzeugen des Bremssprunges ein in einer Verbindungsleitung (21, 23, 33) zwischen Druckregler (16) und Hauptsteuerorgan (14) angeordnetes Sitzventil (24) aufweist, das als Rückschlagventil den Rückfluss von Druckluft aus dem Hauptsteuerorgan (14) in den Druckregler (16) verhindert, sowie die Verbindungsleitung (21, 23, 33) vom Hauptsteuerorgan (14) in Richtung zum Druckregler (16) abschliesst, und das von einem Kolben (27) betätigbar ist, der zum Öffnen des Ventiles (24) von einer Feder (29) belastet ist und zum Schliessen des Ventiles vom Steuerdruck des Druckreglers (16) beaufschlagbar ist.

2. Druckluftbremse nach dem Oberbegriff des Anspruches 1, dadurch gekennzeichnet, dass das Organ zum Erzeugen des Bremssprunges ein in einer Verbindungsleitung (21, 23, 33) zwischen Druckregler (16) und Hauptsteuerorgan (14) angeordnetes Sitzventil (24) aufweist, das die Verbindungsleitung (21, 23, 33) vom Hauptsteuerorgan (14) in Richtung zum Druckregler (16) abschliesst, und das von einem Kolben (27) betätigbar ist, der zum Öffnen des Ventiles (24) von einer Feder (29) belastet ist und zum Schliessen des Ventiles (24) vom Steuerdruck des Druckreglers (16) beaufschlagbar ist, und dass parallel zum genannten Ventil (24) ein Rückschlagventil (46) angeordnet ist, das die Verbindungsleitung vom Hauptsteuerorgan (14) in Richtung zum Druckregler (16) abschliesst.

3. Druckluftbremse nach Anspruch 2, dadurch gekennzeichnet, dass parallel zum Rückschlagventil (46) in einer Verbindungsleitung (55, 56, 33) zwischen einem Druckbegrenzer (12) und dem Hauptsteuerorgan (14) ein nockenbetätigtes Ventil (47) angeordnet ist, das die Verbindungsleitung (55, 56, 33) vom Druckbegrenzer (12) in Richtung zum Hauptsteuerorgan (14) abschliesst.

**Claims**

1. An indirectly-acting compressed-air brake comprising : A main air line (11) and a driver's brake valve having a pressure controller (16) and a main control valve (14) for increasing and reducing the air pressure in the main air line (11) and elements for producing a brake-jump and a release-jump characterised in that said element for producing said brake-jump is a valve (24) arranged in the connecting pipe (21, 23, 33) between the pressure controller (16) and the main control valve (14), this valve (24) acting as non-return valve for preventing the return flow of compressed air from main control valve (14) to the pressure controller (16) and for closing said connecting pipe (21, 23, 33) from said main control valve (14) in direction to said pressure controller (16), with a piston (27) for actuating said valve (24), loaded by a spring (29) for opening said valve (24) and loaded by the control pressure of the pressure controller (16) for closing said valve (24).

2. An indirectly-acting compressed-air brake according to the introduction part of Claim 1, wherein said element for producing said brake-jump is a valve (24) arranged in the connecting pipe (21, 23, 33) between the pressure controller (16) and the main control valve (14) for closing said connecting pipe (21, 23, 33) from said main control valve (14) in direction to said pressure controller (16), with a piston (27) for actuating said valve (24) loaded by a spring (29) for opening said valve (24) and loaded by the control pressure of the pressure controller (16) for closing said valve (24) and wherein a non-return valve (46) is arranged parallel to said valve (24) for closing the connection-pipe from the main control valve (14) in direction to the pressure controller (16).

3. An indirectly-acting compressed-air brake according to claim 2, wherein a cam actuated valve (47) is arranged in a connection pipe (55, 56, 33) between a pressure limiting valve (12) and the main control-valve (14) parallel to said non-return valve (46) for closing the connection pipe (55, 56, 33) from the pressure limiting valve (12) in direction to the main control valve (14).

**Revendications**

1. Frein à air comprimé à action indirecte comportant une conduite principale d'air avec une vanne de mécanicien qui est munie d'un régulateur de pression (16) et d'un organe de commande principale (14) pour abaisser et augmenter la pression d'air dans la conduite d'air principale (11), avec des organes pour créer une variation brusque de freinage et de desserrage, caractérisé en ce que l'organe pour créer la variation brusque de freinage comporte une soupape à siège (24) prévue dans une conduite de liaison (21, 23, 33) entre le régulateur de pression (16) et l'organe de commande principale (14), qui évite en tant que vanne d'arrêt, le retour de l'air comprimé de l'organe de commande principale (14) dans le régulateur de pression (16) et ferme la conduite de liaison (21, 23, 33) de l'organe de commande principale (14) en direction du régulateur de pression (16) et qui est susceptible d'être actionné par un piston (27) qui est chargé par un ressort (29) pour ouvrir la vanne (24) et par la pression de commande du régulateur de pression (16) pour fermer la vanne.

2. Frein à air comprimé selon le préambule de la revendication 1, caractérisé en ce que l'organe pour créer la variation brusque de freinage comporte une soupape à siège (24) prévue dans une conduite de liaison (21, 23, 33) entre le régulateur de pression (16) et l'organe de commande principale (14) qui coupe la conduite de liaison (21, 23, 33) de l'organe de commande principale (14) en direction du régulateur de pression (16) et est susceptible d'être commandée par un piston (27) qui est chargé par un ressort (29) pour ouvrir la soupape (24) et par la pression de commande du régulateur de pression (16) pour fermer la soupape (24) et en ce que en parallèle à la soupape (24) ci-dessus, il est prévu une soupape d'arrêt (46) qui ferme la conduite de liaison allant de l'organe de commande principale (14) vers le régulateur de pression (16).

3. Frein à air comprimé selon la revendication 2, caractérisé en ce que, parallèlement à la vanne d'arrêt (46) dans une conduite de liaison (55, 56, 33) entre un limiteur de pression (12) et l'organe de commande principale (14), il est prévu une vanne (47), commandée par une came qui ferme la conduite de liaison (55, 56, 33) allant du limiteur de pression (12) vers l'organe de commande principale (14).

FIG. 1

FIG. 2

FIG. 3

0 001 136

FIG. 4

FIG. 5